(19) Europäisches Patentamt
European Patent Office
Office européen des brevets

(11) Veröffentlichungsnummer: **0 043 010**
**B1**

# (12) EUROPÄISCHE PATENTSCHRIFT

(45) Veröffentlichungstag der Patentschrift: **21.12.83**

(51) Int. Cl.³: **C 09 B 29/00,** C 09 B 29/32

(21) Anmeldenummer: **81104481.7**

(22) Anmeldetag: **11.06.81**

(54) **Pigmentfarbstoffe.**

(30) Priorität: **02.07.80 DE 3024957**

(43) Veröffentlichungstag der Anmeldung:
**06.01.82 Patentblatt 82/1**

(45) Bekanntmachung des Hinweises auf die Patenterteilung:
**21.12.83 Patentblatt 83/51**

(84) Benannte Vertragsstaaten:
**CH DE FR GB IT LI**

(56) Entgegenhaltungen:
**GB - A - 2 017 097**
**JP - A - 72 031 926**

(73) Patentinhaber: **BASF Aktiengesellschaft,
Carl-Bosch-Strasse 38, D-6700 Ludwigshafen (DE)**

(72) Erfinder: **Dimroth, Peter, Dr., Collinistrasse 5,
D-6800 Mannheim (DE)**
Erfinder: **Lotsch, Wolfgang, Dr., Stettiner Strasse 32,
D-6711 Beindersheim (DE)**

**EP 0 043 010 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Pigmentfarbstoffe

Die Erfindung betrifft Verbindungen der allgemeinen Formel I

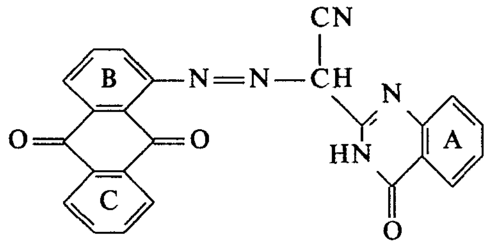

(I)

in der die Ringe A, B, C durch einen bis drei nicht löslichmachende Reste substituiert sein können und der Ring A noch einen anellierten Ring tragen kann.

Nicht löslichmachende Substituenten sind beispielsweise Halogenatome, Alkyl- oder Alkoxygruppen mit 1 bis 6 C-Atomen, Nitro-, Trifluormethyl-, Carbamoyl-, Ureido-, Sulfamoyl- oder Cyangruppen, Alkoxycarbonyl-, Alkanoyl-, Alkylcarbamoyl-, Alkylureido- oder Alkanoylaminogruppen mit 2 bis 6 C-Atomen, Alkylsulfonyl- oder Alkylsulfamoylgruppen mit 1 bis 6 C-Atomen, Aryloxycarbonyl-, Aroyl-, Arylsulfonyl-, Arylcarbamoyl-, Arylsulfamoyl-, Aryl-, Aryloxy-, Thioaryloxy-, Arylureido- oder Arylazogruppen oder ein ankondensierter 5 bis 6gliedriger Heteroring, der im Ring eine

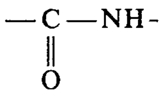 Gruppe

enthält oder ein annellierter 5 bis 6gliederiger aromatischer Ring.

Als nicht löslichmachende Reste bevorzugt sind Chlor, Brom, Methyl, Methoxy, Phenoxy.

Die Substituenten stehen vorzugsweise in den Ringen B und C.

Die Verbindungen der Formel I sind gelb bis orange und eignen sich aufgrund ihrer Unlöslichkeit als Pigmente zum Färben von Druckfarben, Lacken und Kunststoffen. Sie zeichnen sich teilweise durch hervorragende Licht- und Wetterechtheit, gute Farbstärke und gute weitere Echtheiten aus.

Zur Herstellung der Verbindungen der Formel I kann man eine Diazoverbindung von Aminen der Formel II

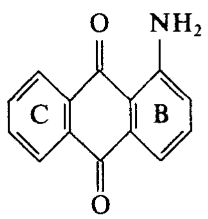

(II)

mit einer Kupplungskomponente der Formel III

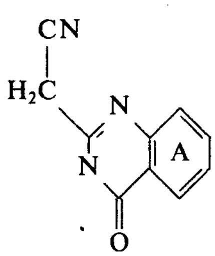

(III)

umsetzen.

Diazotierung und Kupplung können wie bekannt erfolgen, Einzelheiten können den Beispielen entnommen werden, in denen sich Angaben über Teile und Prozente, sofern nicht anders vermerkt, auf das Gewicht beziehen.

Beispiel 1

22,4 Teile 1-Aminoanthrachinon werden in eine Mischung aus 46 Teilen 96%iger Schwefelsäure und 34 Teilen 40%iger Nitrosylschwefelsäure so eingetragen, daß die Temperatur 40°C nicht übersteigt

und zwei Stunden bei 40° C gerührt. Dann wird die Lösung in 300 Teile Eis und Wasser eingerührt, das auskristallisierte Diazoniumsulfat abfiltriert, mit Eiswasser gewaschen.

Das wasserfeuchte Diazoniumsulfat wird dann zusammen mit 19 Teilen Cyanmethylchinazolon und 20 Teilen Pyridin in 400 Teilen N-Methylpyrrolidon 12 Stunden bei Raumtemperatur und 2 Stunden bei 95 C gerührt. Nach dem Filtrieren wird mit N-Methylpyrrolidon und Methanol gewaschen und getrocknet. Man erhält 36 Teile (86% d. Th.) einer gelben Verbindung der Formel IV mit einem Schmelzpunkt >360° C.

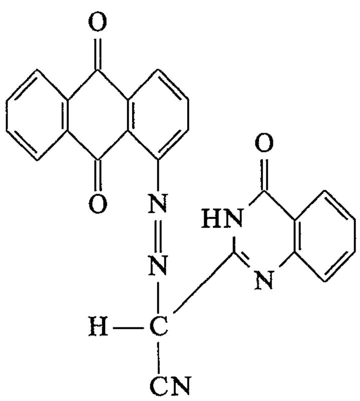

(IV)

Der Farbstoff läßt sich in dieser Form direkt zum Färben von Lacken, Kunststoffen und Druckfarben verwenden. Die damit erzielten Färbungen zeichnen sich durch einen reinen rotstichig gelben Farbton aus mit hervorragenden Licht- und Wetterechtheiten. Eine etwas deckendere und in der Wetterechtheit noch etwas verbesserte Pigmentform erhält man, wenn man z. B. 10 Teile des Farbstoffes der Formel IV in 120 Teilen Dimethylformamid 3 Stunden bei 120° C rührt und nach dem Abfiltrieren mit Dimethylformamid und Methanol wäscht und trocknet. Man erhält dann eine Ausbeute von 9,5 Teilen.

Pigmente mit vergleichbar guten Eigenschaften werden erhalten, wenn man analog Beispiel 1 die Diazoniumsalze der in der Tabelle angegebenen $\alpha$-Aminoanthrachinone auf die Cyanmethylchinazolone kuppelt.

| Bsp. | Diazokomponente | Kupplungskomponente | Farbe |
|---|---|---|---|
| 2 | 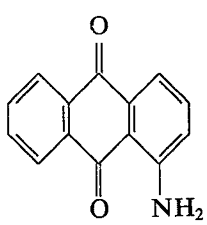 | 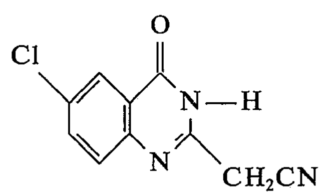 | gelb |
| 3 | desgl. | 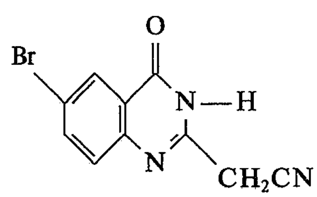 | gelb |
| 4 | desgl. | 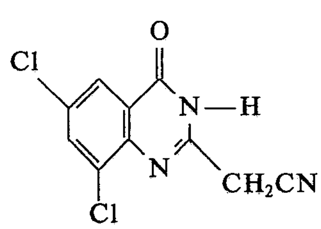 | gelb |

Fortsetzung

| Bsp. | Diazokomponente | Kupplungskomponente | Farbe |
|---|---|---|---|
| 5 | 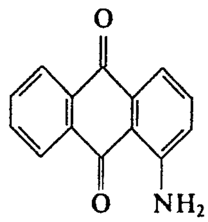 | 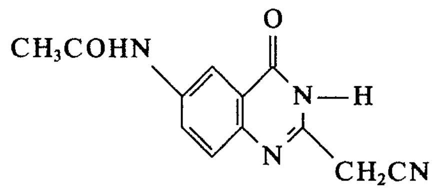 | orange |
| 6 | desgl. | 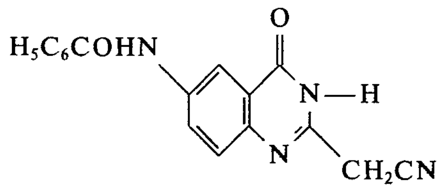 | orange |
| 7 | 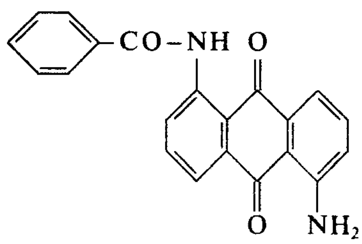 | 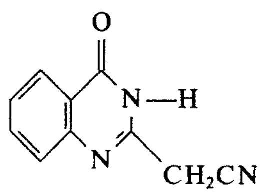 | orange |
| 8 | 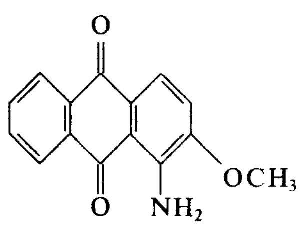 | desgl. | orange |
| 9 | 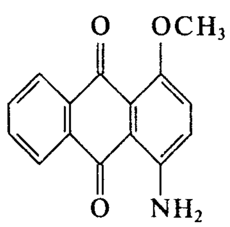 | desgl. | scharlach |
| 10 | 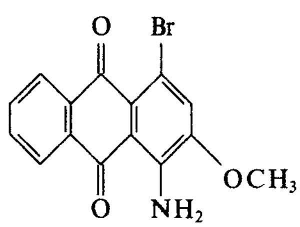 | desgl. | orange |
| 11 | 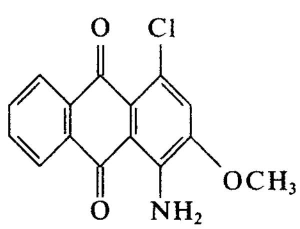 | desgl. | orange |

Fortsetzung

| Bsp. | Diazokomponente | Kupplungskomponente | Farbe |
|---|---|---|---|
| 12 | 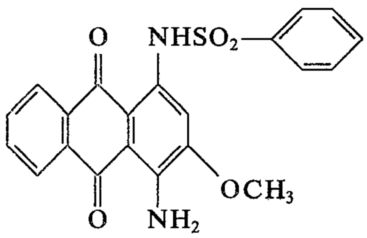 | 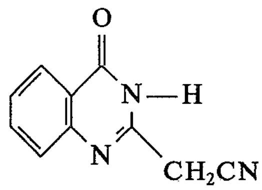 | orange |
| 13 | 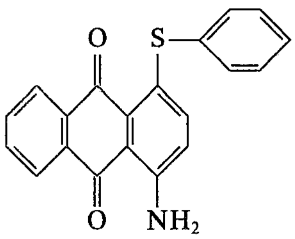 | desgl. | scharlach |
| 14 | 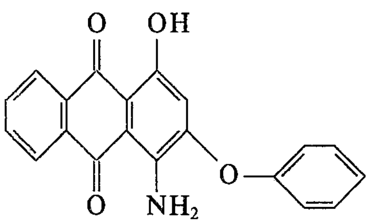 | desgl. | orange |
| 15 | 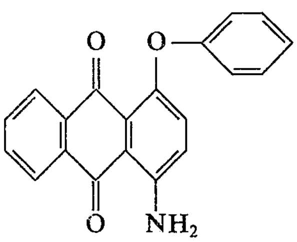 | desgl. | scharlach |
| 16 | 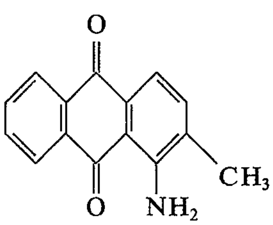 | desgl. | gelb |
| 17 | 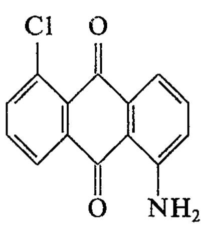 | desgl. | gelb |
| 18 | 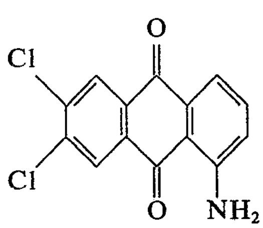 | desgl. | gelb |

Fortsetzung

| Bsp. | Diazokomponente | Kupplungskomponente | Farbe |
|---|---|---|---|
| 19 | 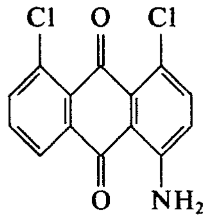 | 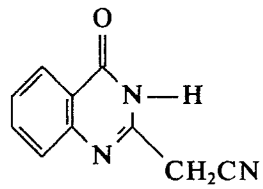 | gelb |
| 20 | 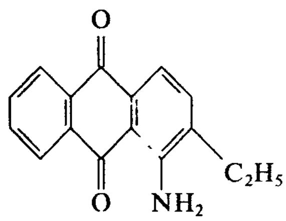 | desgl. | gelb |
| 21 | 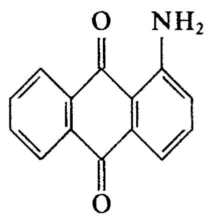 | 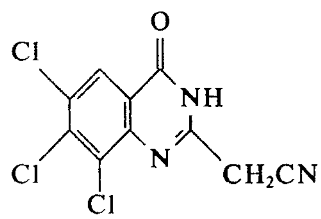 | gelb |
| 22 | desgl. | 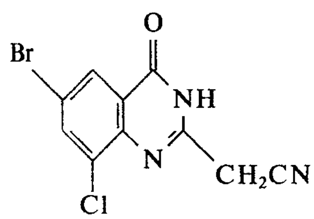 | gelb |
| 23 | desgl. | 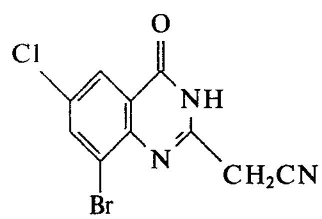 | gelb |
| 24 | desgl. | 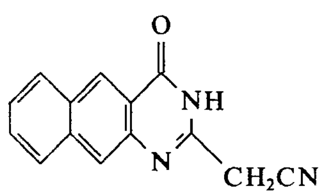 | gelb |

Beispiel 21

(Anwendung)

a) Lack

10 Teile des nach Beispiel 1 erhaltenen Farbstoffes und 95 Teile Einbrennlackmischung, die 70% Kokosalkydharz (60%ig in Xylol gelöst) und 30% Melaminharz (ungefähr 55%ig gelöst in Butanol/Xylol) enthält, werden in einem Attritor angerieben. Nach dem Auftragen und einer

Einbrennzeit von 30 Minuten bei 120°C werden gelbe Volltonlackierungen mit guter Licht- und Überspritzechtheit erhalten. Durch Zumischen von Titandioxyd werden gelbe Weißaufhellungen erhalten.

Verwendet man die in den Beispielen 2 bis 24 beschriebenen Farbstoffe, so werden Lackierungen in ähnlichen gelben bis orangen Farbtönen mit ähnlichen Eigenschaften erhalten.

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195°C). Man erhält gelbe Extrudate, deren Färbung gute Lichtechtheit aufweist.

Verwendet man Mischungen aus 0,5 Teilen Farbstoff und 1 Teil Titandioxyd, so erhält man deckende, gelbe Färbungen.

Verwendet man die Pigmentfarbstoffe, die nach den Beispielen 2 bis 24 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine gelbe Toluol-Tiefdruckfarbe. Die mit dieser Farbe erhaltenen Drucke weisen gute Lichtechtheit auf.

Bei Verwendung der Farbstoffe aus den Beispielen 2 bis 24 werden ähnliche Ergebnisse erhalten.

## Patentansprüche

1. Pigmentfarbstoffe der allgemeinen Formel I

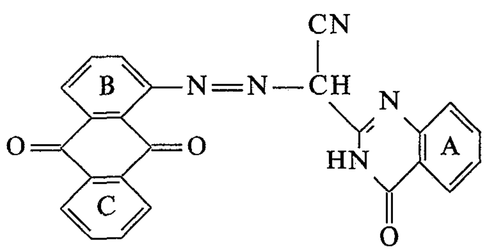

(I)

in der die Ringe A, B, C durch einen bis drei nicht löslichmachende Reste substituiert sein können und der Ring A noch einen anellierten Ring tragen kann.

2. Verbindungen gemäß Anspruch 1, die unsubstituiert oder durch Chlor, Brom, Methyl, Methoxy oder Phenoxy substituiert sind.

3. Verbindungen gemäß Anspruch 1, bei denen die Ringe B und C substituiert sind.

4. Verwendung der Verbindungen gemäß Anspruch 1 als Pigmente in Lacken, Druckfarben oder Kunststoffen.

## Claims

1. A pigment of the general formula I

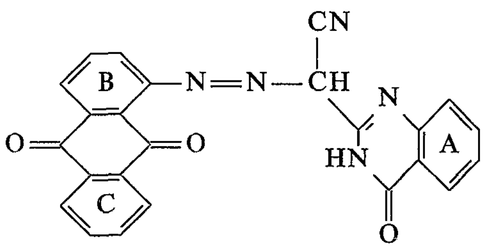

(I)

where the rings A, B and C can be substituted by one, two or three radicals which do not confer solubility, and the ring A can additionally carry a fused ring.

2. A compound as claimed in claim 1, which is unsubstituted or substituted by chlorine, bromine, methyl, methoxy or phenoxy.

3. A compound as claimed in claim 1, in which the rings B and C are substituted.

4. The use of a compound as claimed in claim 1 as a pigment in surface coatings, printing inks or plastics materials.

**Revendications**

1. Colorant pigmentaire de formule générale I

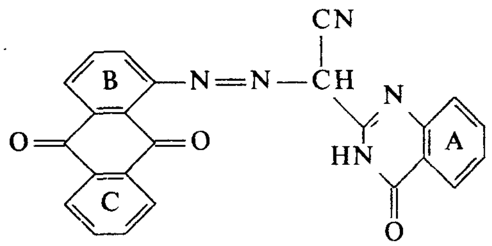

(I)

dans laquelle les noyaux A, B, C peuvent être substitués par un à trois radicaux non solubilisateurs et le noyau A peut encore porter un noyau condensé.

2. Composé selon la revendication 1, qui sont non substitués ou substitués par le chlore, le brome, des groupes méthyle, méthoxy ou phénoxy.

3. Composés selon la revendication 1, dans lesquels les noyaux B et C sont substitués.

4. Utilisation des composés selon la revendication 1 comme pigments dans des vernis, des encres d'imprimerie ou des matières synthétiques.